# EUROPÄISCHE PATENTANMELDUNG

(11) **EP 2 420 370 A1**
(43) Veröffentlichungstag der Anmeldung: **22.02.2012**
(21) Anmeldenummer: 11006665.1
(22) Anmeldetag: 13.08.2011
(51) Int. Cl.: B29B 13/02, F28D 7/10, B29C 35/04

(54) **Vorrichtung zum Erhitzen der Ränder einer Einfüllöffnung einer Kunststofftube**

(30) Priorität: 21.08.2010 DE 102010035051
(71) Anmelder: IWK Verpackungstechnik GmbH, 76297 Stutensee (DE)
(72) Erfinder: Behringer, Thomas, 76467 Bietigheim (DE); Frei, Stefan, 76187 Karlsruhe (DE)
(74) Vertreter: Lasch, Hartmut

(57) **Zusammenfassung**

Eine Vorrichtung zum Erhitzen der Ränder einer Einfüllöffnung (E) einer Kunststoff-Tube (T) mittels heißem Gas besitzt eine Heißgasdüse (22), die in die Einfüllöffnung (E) der Kunststoff-Tube (T) eingeführt werden kann, und eine Heizvorrichtung (20), der über einen Zuführkanal (21,16) Gas zugeführt wird. Das in der Heizvorrichtung (20) erwärmte Gas wird in einem Heißgaskanal (12) der Heißgasdüse (22) zugeführt und es ist ein Abführkanal (14,24) vorgesehen, durch den das Heißgas aus der Heißgasdüse (22) abgeführt werden kann. Dabei ist eine Wärmetauscherstrecke (25) vorgesehen, in der ein Abschnitt des Zuführkanals (21,16) und ein Abschnitt des Abführkanals (14,24) so relativ zueinander angeordnet sind, dass das im Abführkanal (14,24) strömende Heißgas das im Zuführkanal strömende (21,16) Gas erwärmt.

## Beschreibung

Die Erfindung betrifft eine Vorrichtung zum Erhitzen der Ränder einer Einfüllöffnung einer Kunststoff-Tube mittels heißem Gas, mit einer Heißgasdüse, die in die Einfüllöffnung der Kunststoff-Tube einführbar ist, einer Heizvorrichtung, der über einen Zuführkanal ein Gas zuführbar ist, wobei das in der Heizvorrichtung erwärmte Gas in einem Heißgaskanal der Heißgasdüse zuführbar ist, und mit einem Abführkanal, durch den das Heißgas aus der Heißgasdüse abführbar ist.

In einer Tubenfüllmaschine üblichen Aufbaus wird eine Kunststoff-Tube, die an ihrem hinteren Ende unter Bildung einer Einfüllöffnung unverschlossen ist, mit einem Produkt gefüllt, woraufhin die Tubenwandung in einer nachfolgenden Station mittels Heißgas, bei dem es sich üblicherweise um Luft handelt, erwärmt und in einer nachgeschalteten Station verschlossen wird, indem das durch die Heißluft aufgeschmolzene Kunststoffmaterial zusammengedrückt und dadurch verschweißt wird.

Eine bekannte Vorrichtung zum Erhitzen der Ränder der Einfüllöffnung einer Kunststoff-Tube weist eine Heizvorrichtung auf, der über einen Zuführkanal ein Gas und insbesondere Luft entweder aus einem Luftvorrat oder aus der Umgebungsluft zugeführt wird. In der Heizvorrichtung wird die Luft auf eine Temperatur erhitzt, die oberhalb der Schmelztemperatur des Kunststoff-Materials der Tube, beispielsweise bei ca. 350°C liegt. Diese Heißluft wird über einen Heißgaskanal von der Heizvorrichtung zur Heißgasdüse befördert, in der die heiße Luft zunächst auf die Innenwandung des Tubenendes aufgebracht wird und dann das Tubenende umströmt. Das in der Tube befindliche Produkt ist dabei mittels eines Abschirmtellers vor einer übermäßigen Einwirkung der Heißluft geschützt.

Nachdem die Heißluft das Tubenende umströmt hat, muss sie über einen Abführkanal abgeführt werden, um eine übermäßige Erwärmung der Tubenfüllmaschine und deren Umgebung zu vermeiden. Zu diesem Zweck ist es bekannt, die Heißluft durch einen Abführkanal hindurch abzusaugen und abzuleiten, wobei ggf. auch eine Absenkung der Temperatur durch eine Kühlvorrichtung vorgesehen sein kann.

Es hat sich gezeigt, dass das genannte Vorgehen zum Erhitzen der Ränder der Einfüllöffnung der Kunststoff-Tube sehr viel Energie erfordert, da die Luft sehr schnell von der Umgebungstemperatur auf eine Temperatur von mehr als 300°C erhitzt und anschließend wieder auf eine für den Menschen und die Umgebung unbedenkliche Temperatur abgekühlt werden muss.

Der Erfindung liegt die Aufgabe zugrunde, einer Vorrichtung zum Erhitzung der Ränder einer Einfüllöffnung einer Kunststoff-Tube der genannten Art zu schaffen, bei der der Energiebedarf gegenüber vorbekannten Vorrichtungen herabgesetzt ist.

Diese Aufgabe wird erfindungsgemäß durch eine Vorrichtung mit den kennzeichnenden Merkmalen des Anspruchs 1 gelöst. Dabei ist eine Wärmetauscherstrecke vorgesehen, in der ein Abschnitt des Zuführkanals und ein Abschnitt des Abführkanals so relativ zueinander angeordnet sind, dass das im Abführkanal strömende Heißgas das im Zuführkanal strömende Gas erwärmt.

Erfindungsgemäß wird von der Grundüberlegung ausgegangen, das Gas, das in dem Zuführkanal der Heizvorrichtung zugeführt wird, vorzuwärmen, indem die Wärmeenergie des von der Heißgasdüse in dem Abführkanal zurückströmende Heißgas genutzt wird. Die durch die Vorerwärmung der im Zuführkanal der Heizvorrichtung zugeführten Luft mittels der im Abführkanal strömenden Heißluft ist für die Heizvorrichtung weniger Energie notwendig, um die Luft auf die gewünschte Temperatur zu erwärmen, bei der das Material der Kunststoff-Tube aufgeschmolzen werden kann. Zusätzlich kann die Kühlvorrichtung, die die im Abführkanal abgeführte Heißluft auf ein für den Menschen erträgliches Temperaturniveau absenkt, mit geringer Leistung ausgelegt werden.

In einer bevorzugten Ausgestaltung der Erfindung ist vorgesehen, dass der Zuführkanal einen ersten Ringkanal und der Abführkanal einen zweiten Ringkanal umfasst, wobei die beiden Ringkanäle durch eine Trennwand voneinander getrennt sind, über die der Wärmeaustausch stattfindet. In einer möglichen Ausgestaltung der Erfindung ist vorgesehen, dass die Ringkanäle koaxial zueinander angeordnet sind, wobei vorzugsweise der erste Ringkanal des Zuführkanals auf der Außenseite des zweiten Ringkanals des Abführkanals angeordnet ist.

Um einen möglichst kompakten konstruktiven Aufbau zu erreichen, kann vorzugsweise vorgesehen sein, dass die Ringkanäle um den Heißgaskanal herum angeordnet sind, durch den die Heißluft von der Heizvorrichtung zur Heißgasdüse gefördert wird.

In vorteilhafter Weise der Erfindung kann vorgesehen sein, dass der Heißgaskanal, der Zuführkanal bzw. zumindest dessen erster Ringkanal und der Abführkanal bzw. zumindest dessen zweiter Ringkanal in einem gemeinsamen Gehäuse ausgebildet sind, das vorzugsweise an seinem unteren Ende die Heißgasdüse trägt. Dabei kann am entgegengesetzten oberen Ende des Gehäuses die Heizvorrichtung angeordnet sein.

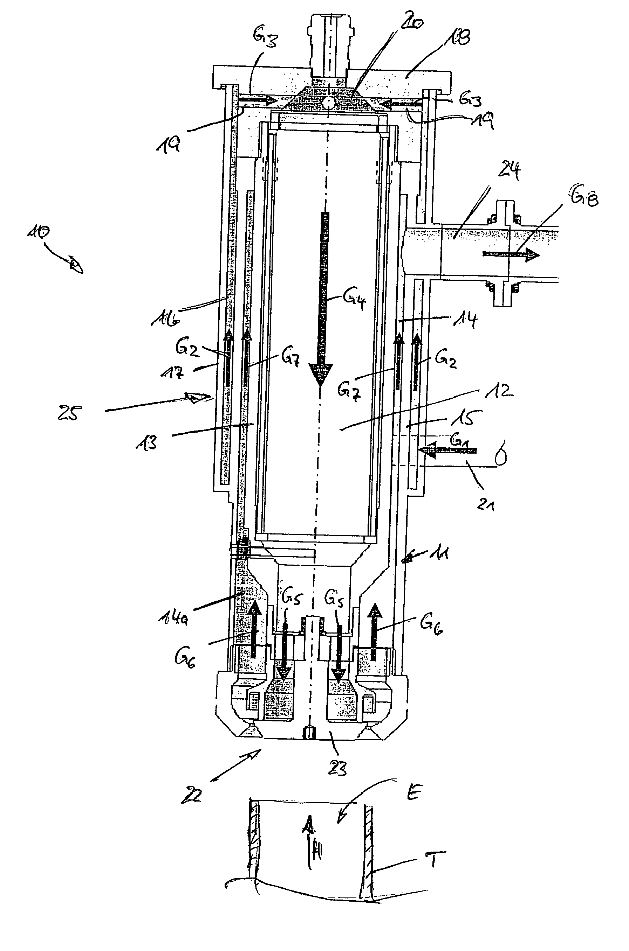

Weitere Einzelheiten und Merkmale der Erfindung sind aus der folgenden Beschreibung eines Ausführungsbeispiels unter Bezugnahme auf die Zeichnung ersichtlich, wobei die einzige Figur einen schematischen Längsschnitt durch die erfindungsgemäße Vorrichtung zeigt.

Eine Vorrichtung 10 zum Erhitzen der Ränder einer Einfüllöffnung E einer Kunststoff-Tube T besitzt ein rohrförmiges Gehäuse 11, das an seinem unteren Ende eine an sich bekannte Heißgasdüse 22 mit einem zentralen Abschirmteller 23 besitzt. Durch Anheben der Tube T (siehe Pfeil H) wird der Abschirmteller 23 in den Innenraum der Tube T eingeführt und die oberen Enden der Einfüllöffnung E der Tube T sind dann innerhalb der Heißgasdüse 22 angeordnet.

Am oberen, der Heißgasdüse 22 entgegengesetzten Ende des Gehäuses 11 ist eine Heizvorrichtung 20 angeordnet, die über einen zentralen, axial verlaufenden Heißgaskanal 12 mit der Heißgasdüse 22 in Verbindung steht. Der Heißgaskanal 12 ist von einer umlaufenden Wandung 13 begrenzt, die außenseitig mit Abstand von einer Trennwand 15 und diese wiederum außenseitig mit Abstand von einer Außenwand 17 umgeben ist. Zwischen der Außenwand 17 und der Trennwand 15 ist ein äußerer erster Ringkanal 16 gebildet, dem über eine Versorgungsleitung 21 Umgebungsluft oder Luft aus einem Luftvorrat zugeführt werden kann. Die Umgebungsleitung 21 zweigt im dargestellten Ausführungsbeispiel etwa in der Mitte des Gehäuses 11 radial nach außen von diesem ab.

Am oberen, der Heißgasdüse 22 abgewandten Ende ist auf das Gehäuse 11 ein Deckel 18 aufgesetzt, der mehrere radial verlaufende Radialkanäle 19 aufweist. Der äußere erste Ringkanal 16 steht mit den Radialkanälen 19 in Verbindung und die Radialkanäle 19 münden in der Heizvorrichtung 20.

Zwischen der Wandung 13 und der Trennwand 15 ist ein innerer zweiter Ringkanal 14 gebildet, der sich von der unteren Heißgasdüse 22 über annähernd die gesamte Höhe des Gehäuses 11 erstreckt und im oberen Bereich in eine sich radial nach außen erstreckende Abführleitung 24 übergeht. Wie die Figur zeigt, sind die beiden Ringkanäle 14 und 16 und der axiale Heißgaskanal koaxial zueinander angeordnet und parallel ausgerichtet.

Die zu erwärmende Luft wird über die Versorgungsleitung 21 zugeführt (Pfeil G₁) und tritt in den äußeren ersten Ringkanal 16 ein, in dem sie nach oben zu dem Deckel 19 (s. Pfeile G₂) strömt und dort in die Radialkanäle 19 eintritt, in denen sie zur Heizvorrichtung 20 strömt (Pfeile G₃).

In der Heizvorrichtung 20 wird die Luft auf eine Temperatur von beispielsweise 350°C erwärmt, die für das Anschmelzen des Kunststoffmaterials der Tube T geeignet ist. Die so erwärmte Luft strömt in dem zentralen Heißgaskanal 12 zur unteren Heißgasdüse 22 (Pfeil G₄), wird dort über den Umfang verteilt (Pfeile G₅) und auf die Innenwandung der eingesetzten Tube T gelenkt (nicht dargestellt). Nach Umströmen des hinteren bzw. oberen Randes der Tube T tritt die Heißluft in einen Abschnitt 14a vergrößerten Querschnitts des zweiten inneren Ringkanals 14 ein (Pfeile G₆) und strömt in diesem nach oben (Pfeile G₇) . Dabei ist durch die Anordnung der beiden Ringkanäle 14 und 16 in einem mittleren Abschnitt des Gehäuses 11 eine Wärmetauscherstrecke 25 gebildet, in der die von der Heißgasdüse 22 kommende Heißluft die Trennwand 15 erwärmt, wodurch die im äußeren zweiten Ringkanal 14 zur Heizvorrichtung strömende Luft erwärmt bzw. vorgewärmt wird.

Im oberen Bereich des inneren zweiten Ringkanals 14 tritt die Heißluft in die Abführleitung 24 ein und wird in dieser abgeleitet (Pfeil G₈) und gegebenenfalls einer weiteren Behandlung, beispielsweise einer Kühlung, zugeführt.

## Patentansprüche

1. Vorrichtung zum Erhitzen der Ränder einer Einfüllöffnung (E) einer Kunststofftube (T) mittels heißem Gas, mit einer Heißgasdüse (22), die in die Einfüllöffnung (E) der Kunststofftube (T) einführbar ist, einer Heizvorrichtung (20), der über einen Zuführkanal (21, 16) ein Gas zuführbar ist, wobei das in der Heizvorrichtung (20) erwärmte Gas in einem Heißgaskanal (12) der Heißgasdüse (22) zuführbar ist, und mit einem Abführkanal (14, 24), durch den das Heißgas aus der Heißgasdüse (11) abführbar ist, **gekennzeichnet durch** eine Wärmetauscherstrecke (25), in der ein Abschnitt des Zuführkanals (21, 16) und ein Abschnitt des Abführkanals (14, 24) so relativ zueinander angeordnet sind, dass das im Abführkanal (14, 24) strömende Heißgas das im Zuführkanal (21, 16) strömende Gas erwärmt.

2. Vorrichtung nach Anspruch 1, **dadurch gekennzeichnet, dass** der Zuführkanal einen ersten Ringkanal (16) und der Abführkanal einen zweiten Ringkanal (14) umfasst, wobei die beiden Ringkanäle (14, 16) durch eine Trennwand (15) voneinander getrennt sind.

3. Vorrichtung nach Anspruch 2, **dadurch gekennzeichnet, dass** die Ringkanäle (14, 16) koaxial zueinander angeordnet sind.

4. Vorrichtung nach Anspruch 2 oder 3, **dadurch gekennzeichnet, dass** der erste Ringkanal (16) auf der Außenseite des zweiten Ringkanals (14) angeordnet ist.

5. Vorrichtung nach einem der Ansprüche 2 bis 4, **dadurch gekennzeichnet, dass** die Ringkanäle (14, 16) um den Heißgaskanal (12) herum angeordnet sind.

6. Vorrichtung nach einem der Ansprüche 1 bis 5, **dadurch gekennzeichnet, dass** der Heißgaskanal, der Zuführkanal und der Abführkanal in einem gemeinsamen Gehäuse (11) ausgebildet sind.

7. Vorrichtung nach Anspruch 6, **dadurch gekennzeichnet, dass** die Heißgasdüse (22) am unteren Ende des Gehäuses (11) angeordnet ist.
